(19) Europäisches Patentamt
European Patent Office
Office européen des brevets

(11) **EP 2 317 799 A1**

(12) **EUROPEAN PATENT APPLICATION**
published in accordance with Art. 153(4) EPC

(43) Date of publication:
**04.05.2011 Bulletin 2011/18**

(51) Int Cl.:
*H04W 36/30* (2009.01)   *H04W 24/10* (2009.01)
*H04W 36/00* (2009.01)   *H04W 52/02* (2009.01)

(21) Application number: **09808215.9**

(22) Date of filing: **12.08.2009**

(86) International application number:
**PCT/JP2009/064234**

(87) International publication number:
**WO 2010/021279 (25.02.2010 Gazette 2010/08)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **19.08.2008 JP 2008211213**

(71) Applicant: **NTT DOCOMO, INC.
Chiyoda-ku
Tokyo 100-6150 (JP)**

(72) Inventors:
• **NAKAMORI, Takeshi**
  **Tokyo 100-6150 (JP)**
• **ISHII, Hiroyuki**
  **Tokyo 100-6150 (JP)**
• **IWAMURA, Mikio**
  **Tokyo 100-6150 (JP)**

(74) Representative: **HOFFMANN EITLE
Patent- und Rechtsanwälte
Arabellastraße 4
81925 München (DE)**

(54) **MOBILE STATION AND MOBILE COMMUNICATION METHOD**

(57)   A mobile station UE includes a measurement unit (13) and a determining unit (14) which determines whether to notify a measurement result obtained by the measurement unit (13) in accordance with the measurement result and an a parameter for determination. When the mobile station UE is in an discontinuous reception state, the measurement unit (13) continues measurement even after the reception period ends if a predetermined condition is satisfied and stops the measurement if the predetermined condition is not satisfied before the determining unit (14) determines to notify the measurement result.

FIG. 6

**Description**

**TECHNICAL FIELD**

The present invention relates to a mobile station and a mobile communication method.

**BACKGROUND ART**

In a mobile communication system including multiple cells, a mobile station UE (User Equipment: user device) is configured to continue communication by switching from the current cell to another cell when the mobile station moves from the current cell to the other cell. Such switching between cells is called "handover."

In the mobile communication system, generally, the mobile station UE is configured to perform handover to a neighbor cell when the mobile station UE moves to the neighbor cell and when the power of a signal received from the neighbor cell by the mobile station UE becomes higher than the power of a signal received from a serving cell.

For example, the powers of the signals from the neighbor cell and serving cell are received powers of downlink reference signals transmitted from the neighbor cell and serving cell (RSRP: reference signal received power), respectively.

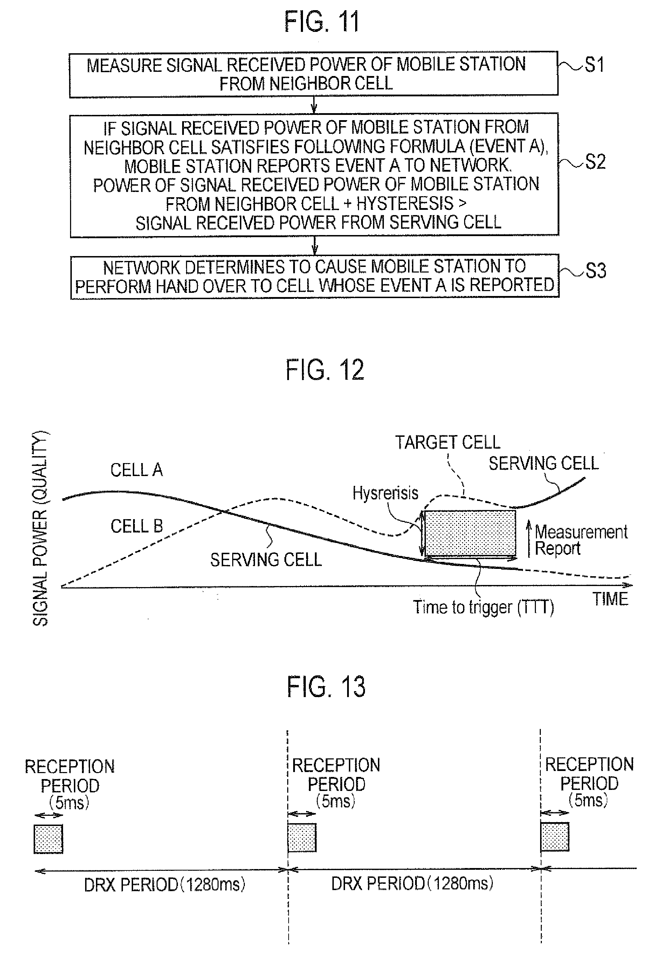

With reference to FIGS. 11 and 12, a description will be specifically given of an example of the handover procedure.

As shown in FIG. 11, in step S1, the mobile station UE measures the power of a signal received from the neighbor cell.

In step S2, the mobile station UE determines whether the power of the signal received from the neighbor cell satisfies the following (Formula 1).

$$\text{Received power of signal from neighbor cell} + \text{hysteresis} > \text{received}$$

$$\text{power of signal from serving cell} \dots \text{(Formula 1)}$$

If it is determined that (Formula 1) is satisfied, in the step S2, the mobile station UE notifies a network of an event A3 for reporting the aforementioned measurement result.

Specifically, as shown in FIG. 12, the mobile station UE measures powers of the signals received from the serving cell (a cell A) and the neighbor cell (a cell B) which is a target be monitored. The mobile station UE determines whether to make notification of the result of the aforementioned measurement using previously notified "hysteresis [dB]" and "TTT (time to trigger) [ms]".

To be more specific, in FIG. 12, if the received power (radio quality) of signal from the cell B is kept higher than the received power of signal from the cell A by the hysteresis or more for the predetermined period of time "TTT" or longer, the mobile station UE determines to make notification of the aforementioned result of measurement (measurement report).

Herein, the aforementioned TTT and hysteresis are defined as a protective function to prevent an error of the aforementioned determination. For example, the TTT is used to determine whether to make notification of the measurement result based on not a result of momentary measurement but a result of measurement for a predetermined period of time. This can prevent an error of the aforementioned determination.

If the value of the above TTT is set too small, the effect thereof of preventing an error of the aforementioned determination is reduced. However, the delay in determining whether to make notification of the measurement result can be reduced.

On the other hand, if the value of the TTT is set too large, the effect thereof of preventing an error of the determination is increased, but there is a delay in determining whether to make notification of the measurement result.

In other words, the value of the "TTT" is set to an optimal value in consideration of both the effect of preventing an error of the determination and the delay of handover which can be caused resulting from the notification of the measurement result.

Herein, it is assumed that the signal received power Fn (radio quality) has a value calculated by the following (Formula 2) and (Formula 3). Specifically, in the mobile station UE, an upper layer performs filtering processing (L3) expressed by Formula 2 for the values measured by the physical layer.

$$Fn = (1-a)\cdot Fn\text{-}1 + a\cdot Mn \qquad (Formula\ 2)$$

$$a = 1/2(k/4) \qquad (Formula\ 3)$$

where the value of "k" in (Formula 3) has been notified from the radio base station to the mobile station UE in advance like the "hysteresis" and "TTT." The "hysteresis" is a value provided to suppress frequent handover from the serving cell to the adjacent cell on the cell boundary, and may be a positive or negative value.

In step S3, upon receiving the notification of the event A3, the network determines that the mobile station UE is to perform handover to the cell concerning the received event A3.

In a mobile communications system of the LTE (Long Term Evolution) scheme, DRX (Discontinuous Reception) control is applied.

Such discontinuous reception control is applied when the radio base station eNB and the mobile station UE are connected, and the data to be transmitted does not exist, and the mobile station UE in a discontinuous reception state is configured to receive a down control signal which is transmitted periodically, i.e., discontinuously via a PDCCH (Physical Downlink Control Channel).

In such a case, the mobile station UE receives the downlink control signals transmitted through the physical downlink control channel PDCCH only intermittently, not all the time. This can reduce power consumption of the battery of the mobile station UE.

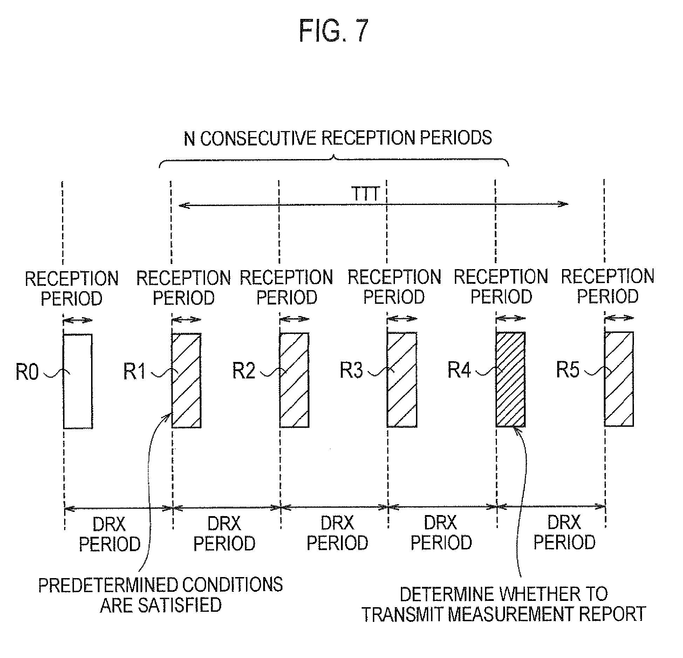

More specifically, as shown in FIG. 7, the mobile station UE is configured to receive the down control signal transmitted via the physical downlink control channel PDCCH only in the reception duration (5 ms in the example of FIG. 7) provided every DRX period (1280 ms in the example of FIG. 7), and to turn other transmitters/receivers off. As a result, the power consumption of a battery can be reduced in the mobile station UE.

The LTE mobile communication system controls whether to turn each mobile station UE into the discontinuous reception state or not-discontinuous reception state based on the presence of data to be communicated, as described above. Accordingly, the aforementioned handover is performed regardless of whether or not the mobile station UE is in the discontinuous reception state.

## SUMMARY OF THE INVENTION

### PROBLEMS TO BE SOLVED BY THE INVENTION

As described above, in the LTE mobile communication system, the discontinuous reception control is applied when the radio base station eNB and the mobile station UE are in connection. In other words, each mobile station UE can be in either of two states of the discontinuous reception state and non-discontinuous reception state depending on the presence of data to be communicated.

Herein, the mobile station UE in the discontinuous reception state is generally configured to perform measurement of the neighbor cell only at the reception periods under the discontinuous reception control in order to maintain the effect of the discontinuous reception control on battery saving.

For example, if the mobile station UE is configured to measure the neighbor cell every 40 ms in the non-discontinuous reception state, the optimal value of the TTT is assumed to be 640 ms.

However, when the DRX period is set to 1280 ms, the mobile station UE in the discontinuous reception state is configured to measure the neighbor cell every 1280 ms, and the value of the TTT "640 ms" has no meaning.

Accordingly, when the mobile station UE is in the discontinuous reception state, it is difficult to perform handover based on the value of the TTT determined in consideration of both the effect of preventing erroneous determination and the delay in determining whether to make notification of the measurement result, that is, the delay of handover.

The present invention was made in the light of the aforementioned problem, and an objective of the present invention is to provide a mobile station and a mobile communication method which are capable of properly performing measurement of a neighbor cell and handover under application of the discontinuous reception control.

### MEANS FOR SOLVING THE PROBLEMS

A first feature of the present invention is summarized as a mobile station communicating with a radio base station, the mobile station including: a parameter acquisition unit configured to acquire a parameter for determination from the radio base station; a measurement unit configured to measure radio qualities of the mobile station in a serving cell and a neighbor cell; a determining unit configured to determine whether or not to notify a measurement result performed by the measurement unit, based on the measurement result and the parameter for determination acquired by the parameter acquisition unit; and a notification unit configured to notify the radio base station of the measurement result when the determining unit determines to notify the measurement result, wherein in the case where the mobile station is in a discontinuous reception state, the measurement unit continues the measurement even after an end of a reception period when a predetermined condition is satisfied, and stops the measurement when the predetermined condition becomes unsatisfied before the determining unit determines to notify the measurement result.

In the first feature of the present invention, the determining unit may determine to notify the measurement result when the predetermined condition continues to be satisfied for a predetermined period of time or longer, and the parameter for determination may include a first parameter indicating the predetermined period of time.

In the first feature of the present invention, the determining unit may determine to notify the measurement result when the predetermined condition continues to be satisfied for a predetermined period of time or longer, and the parameter for determination includes a second parameter which defines the predetermined condition.

A second feature of the present invention is summarized as a mobile communication method for communication between a radio base station and a mobile station, the method including the steps of: a step A of notifying a parameter for determination from the radio base station to the mobile station; a step B of measuring, at the mobile station, radio qualities of the mobile station in a serving cell and a neighbor cell; a step C of determining, at the mobile station, whether or not to notify a measurement result, based on the measurement result and the acquired parameter for determination; a step D of notifying the measurement result from the mobile station to the radio base station when it is determined to notify the measurement result; and a step E of determining, at the radio base station, whether or not the mobile station is to perform handover based on the measurement result of the radio qualities of the mobile station in the serving and neighbor cells, the measurement result being notified from the mobile station, wherein in the step B, in the case of a discontinuous reception state, the mobile station continues the measurement even after an end of a reception period when a predetermined condition is satisfied, and stops the measurement when the predetermined condition becomes unsatisfied before determination of notifying the measurement result.

A third feature of the present invention is summarized as a mobile station communicating with a radio base station, the mobile station including: a parameter acquisition unit configured to acquire a parameter for determination from the radio base station; a measurement unit configured to measure radio qualities of the mobile station in a serving cell and a neighbor cell; a determining unit configured to determine whether or not to notify a measurement result by the measurement unit, based on the measurement result and the parameter for determination acquired by the parameter acquisition unit; and a notification unit configured to notify the radio base station of the measurement result when the determining unit determines to notify the measurement result, wherein in the case where the mobile station is in a discontinuous reception state, the determining unit determines to notify the measurement result when a predetermined condition is satisfied at consecutive reception periods of a number calculated based on a discontinuous reception period and the parameter for determination.

A fourth feature of the present invention is summarized as a mobile communication method for communication between a radio base station and a mobile station, the method including the steps of: a step A of notifying a parameter for determination from the radio base station to the mobile station; a step B of measuring, at the mobile station, radio qualities of the mobile station in a serving cell and a neighbor cell; a step C of determining, at the mobile station, whether or not to notify a measurement result, based on the measurement result and the acquired parameter for determination; a step D of notifying the measurement result from the mobile station to the radio base station, when it is determined to notify the measurement result; and a step E of determining, at the radio base station, whether or not the mobile station is to perform handover based on the measurement result of the radio qualities of the mobile station in the serving and neighbor cells, the measurement result being notified from the mobile station, wherein in the step C, in the case of a discontinuous reception state, the mobile station determines to notify the measurement result when the predetermined condition is satisfied at consecutive reception periods of a number calculated based on a discontinuous reception period and the parameter for determination.

## EFFECT OF THE INVENTION

As described above, according to the present invention, provided are a mobile station and a mobile communication method which are capable of properly performing measurement of a neighbor cell and handover under application of the discontinuous reception control.

## BRIEF DESCRIPTION OF DRAWINGS

FIG. 1 is an entire constitution view of a mobile communication system according to a first embodiment of the present invention.

FIG. 2 is a functional block diagram of a mobile station according to the first embodiment of the present invention.

FIG. 3 is a diagram for explaining an operation of the mobile station according to the first embodiment of the present invention.

FIG. 4 is a diagram for explaining the operation of the mobile station according to the first embodiment of the present invention.

FIG. 5 is a functional block diagram of a radio base station according to the first embodiment of the present invention.

FIG. 6 is a flowchart showing the operation of the mobile station according to the first embodiment of the present invention.

FIG. 7 is a diagram for explaining an operation of a mobile station according to modification 1 of the present invention.

FIG. 8 is a flowchart showing the operation of the mobile station according to Modification 1 of the preset invention.

FIG. 9 is a diagram for explaining the operation of the mobile station according to Modification 2 of the present invention.

FIG. 10 is a diagram for explaining the operation of the mobile station according to Modification 3 of the present invention.

FIG. 11 is a flowchart showing a general handover operation.

FIG. 12 is a diagram for explaining a general method of making notification of measurement report.

FIG. 13 is a diagram for explaining an operation of a mobile station in a general discontinuous reception state.

## EMBODIMENTS FOR CARRYING OUT THE INVENTION

(Configuration of Mobile Communication System According to First Embodiment of the Invention)

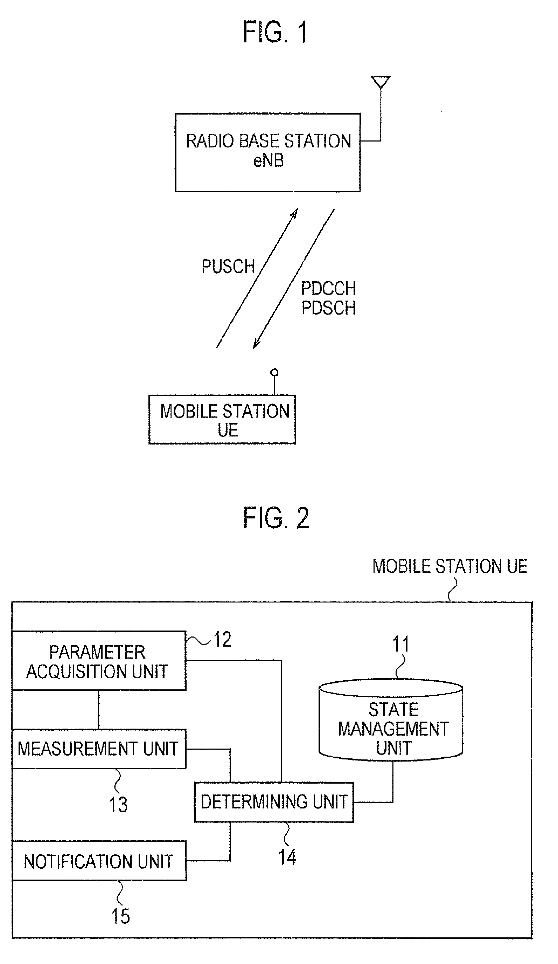

With reference to FIGS. 1 to 5, a description will be given of a configuration of a mobile communication system according to a first embodiment of the present invention.

As shown in FIG. 1, the mobile communication system according to the first embodiment is an LTE mobile communication system. For such a mobile communication system, it is being examined to employ an orthogonal frequency division multiplexing (OFDM) method and a single-carrier frequency division multiple access (SC-FDMA) method as the downlink and uplink radio access methods, respectively.

The OFDM method is a method which divides a particular frequency band into multiple narrow frequency bands (subcarriers) and transmits data on the individual narrow frequency bands. In the OFDM method, the subcarriers are densely located on the frequency axis so as to overlap each other but not to interfere with each other. The OFDM therefore achieves high speed transmission and provides higher frequency usage efficiency.

The SC-FDMA method is a transmission method which divides a particular frequency band and allows mobile stations UE to individually use the divided frequency bands different from each other for transmission. The SC-FDMA is therefore capable of reducing the interference between the multiple mobile stations UE. According to the SC-FDMA method, because of the characteristic of less fluctuation in transmission power, it is possible to achieve low power consumption and wide coverage of each mobile station UE.

In the mobile communication system according to the embodiment, the radio base station eNB is configured to transmit downlink control signals through the physical downlink control channel PDCCH and transmits downlink data signals through a physical downlink shared channel PDSCH.

In the mobile communication system according to the embodiment, on the other hand, each mobile station UE is configured to transmit uplink data signals through a physical uplink shared channel PUSCH.

As shown in FIG. 2, the mobile station UE includes a state management unit 11, a parameter acquisition unit 12, a measurement unit 13, a determining unit 14, and a notification unit 15.

The state control unit 11 is configured to manage whether the mobile station UE is in a discontinuous reception state.

The parameter acquisition unit 12 is configured to acquire parameters for determination from a radio base station eNB. Herein, the parameters for determination are parameters used by the determining unit 14 when the determining unit 14 determines whether or not to notify the result of measurement by the measurement unit 13.

The measurement unit 13 is configured to measure the radio qualities of the mobile station UE for the serving and neighbor cells.

For example, the measurement unit 13 may be configured to measure powers of signals received by the mobile station UE from the serving and neighbor cells (for example, reference signals (RS) and the like) as the radio qualities of the mobile station UE for the serving and neighbor cells. The received power of the reference signal may be called RSRP (reference signal received power).

Moreover, the measurement unit 13 may use the values calculated by (Formulae 2) and (Formula 3) as measurement values of the powers Fn of signals received by the mobile station UE from the serving and neighbor cells. The measurement intervals in the physical layer are 200 ms, for example.

Herein, when the mobile station UE is in the discontinuous reception state, the measurement unit 13 may be configured to continue the above measurement after each reception period ends if predetermined conditions are satisfied (if it is notified by the determining unit 14 that the predetermined conditions are satisfied).

The measurement unit 13 may be configured to continue the aforementioned measurement even after the reception period ends if the predetermined conditions are satisfied (if it is notified by the determining unit 14 that the predetermined conditions are satisfied) and stop the measurement when the predetermined conditions become unsatisfied (when it is notified by the determining unit 14 that the predetermined conditions are not satisfied) before the determining unit 14 determines to notify the measurement result (that is, before a predetermined period of time elapses).

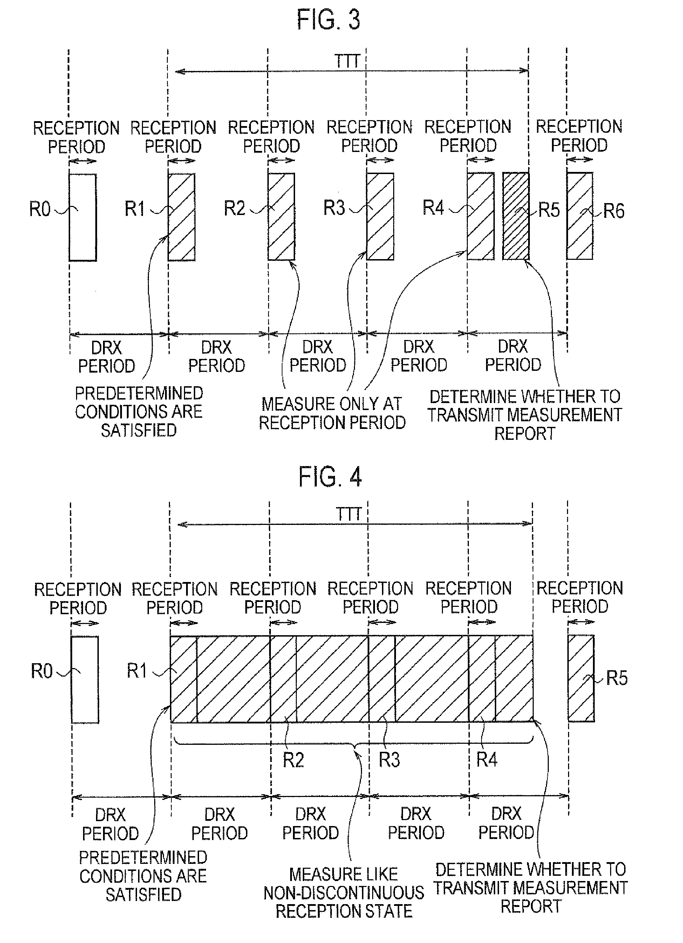

As shown in FIG. 3, in the case of continuing the measurement as described above, the measurement unit 13 may be configured to carry out the measurement only at the reception periods in the discontinuous reception state and carry out the measurement regardless of the reception periods when it is determined whether to make notification of the measurement result.

As shown in FIG. 4, in the case of continuing the measurement as described above, the measurement unit 13 may carry out the measurement in a similar manner to the case of the non-discontinuous reception state.

The determining unit 14 is configured to determine whether or not to notify the measurement result by the measurement unit 13, that is, whether or not to transmit the measurement report including the measurement result by the measurement unit 13.

For example, the determining unit 14 may be configured to determine to notify the aforementioned measurement result when the predetermined conditions continue to be satisfied for a predetermined period of time or longer. Herein, the determining unit 14 may use the predetermined condition as the condition for (Formula 1) above.

Moreover, the determining unit 14 is configured to determine whether or not to notify the measurement result by the measurement unit 13, based on the radio qualities of the mobile station UE measured by the measurement unit 13 for the serving and neighbor cells (the measurement result by the measurement unit 13) and the parameters for determination acquired by the parameter acquisition unit 12.

Furthermore, the determining unit 14 may be configured to notify the measurement unit 13 of whether the predetermined conditions are satisfied based on the measurement result by the measurement unit 13.

The aforementioned parameters for determination includes a first parameter indicating the aforementioned predetermined period of time (TTT), a second parameter which defines the aforementioned predetermined conditions (the hysteresis, k (filter coefficient), and the like).

Examples of the first and second parameters for determination (the TTT, hysteresis, and k (filter coefficient)) are shown.

[Table 1]

| TTT (s) | Hysteresis (dB) | k (filter coefficient) |
|---------|-----------------|------------------------|
| 0.64    | 3               | 8                      |

As seen from the aforementioned example, in the mobile communication system according to the first embodiment, the mobile station UE is configured to continue the measurement of the radio qualities of the mobile station UE for the serving and neighbor cells and stop the measurement when the predetermined conditions are not satisfied or when the predetermine conditions become unsatisfied before the predetermined period of time elapses.

A description will be given of the effect of the mobile station UE in the discontinuous reception state continuing the measurement of the radio qualities of the mobile station UE for the serving and neighbor cells when the predetermined conditions are satisfied. Herein, the first parameter (TTT) for determination is set to 640 [ms], and the DRX period is set to 1280 [ms], for example.

When the mobile station UE is in the discontinuous reception state, the mobile station UE performs the measurement only at the reception periods in the discontinuous reception control. The measurement of the radio qualities is performed less frequently than when the mobile station UE is in the non-discontinuous reception state. Accordingly, it takes longer time to acquire enough samples necessary to determine whether to transmit the measurement report.

As described above, if the predetermined conditions are satisfied at a certain reception period, the mobile station UE can perform proper determination even in the discontinuous reception state by continuing the aforementioned measurement for a period equal to the value of the first parameter (640 [ms]).

Moreover, the mobile station UE continues the aforementioned measurement during the period indicated by the first parameter (640 [ms]) only when the predetermined conditions are satisfied, thus minimizing an increase in power consumption.

The determination whether the predetermined conditions are satisfied may be performed based on the parameters for determination or other parameters.

The value of the hysteresis in the parameters for the discontinuous reception state may be smaller than the value of the hysteresis in the parameters for the non-discontinuous reception state. Alternatively, the value of the filter coefficient in the parameters for the discontinuous reception state may be smaller than the value of the filter coefficient in the parameters for the non-discontinuous reception state.

The aforementioned magnitude relation between the first parameter for the discontinuous reception state and the first parameter for the non-discontinuous reception state is just an example and may be inverted. Alternatively, the first parameters for the discontinuous and non-discontinuous reception states may be the same.

The aforementioned magnitude relation between the second parameter for the discontinuous reception state and the second parameter for the non-discontinuous reception state is just an example and may be inverted. Alternatively, the second parameters for the discontinuous and non-discontinuous reception state parameters may be the same.

For example, the hysteresis (3 dB) for the discontinuous reception state may be the same as the hysteresis (3 dB) for the non-discontinuous reception state.

Alternatively, the filter coefficient (4) for the discontinuous reception state may be smaller than the filter coefficient (8) for the non-discontinuous reception state.

In the discontinuous reception state, the measurement is performed less frequently than in the non-discontinuous reception state. Accordingly, averaging based on the filter coefficient is sometimes improper. In such a case, the filter coefficient (4) for the discontinuous reception state is set smaller than the filter coefficient (8) for the non-discontinuous reception state to reduce the effect of the averaging on each measurement. It is therefore possible to provide more proper measurement in the discontinuous reception state.

Herein, when the mobile station UE is in the discontinuous reception state, the determining unit 14 is configured to determine whether or not to notify the aforementioned measurement result based on the radio qualities measured by the measurement unit 13 for the serving and neighbor cells and the parameters for determination acquired by the parameter acquisition unit 12.

On the other hand, also when the mobile station UE is not in the discontinuous reception state, the determining unit 14 is configured to determine whether or not to notify the aforementioned measurement result based on the radio qualities measured by the measurement unit 13 for the serving and neighbor cells and the parameters for determination acquired by the parameter acquisition unit 12.

The notification unit 15 is configured to notify the radio base station eNB of the measurement result when the determining unit 14 determines to notify the measurement result.

Specifically, the notification unit 15 is configured to notify the radio base station eNB of the measurement result through the physical uplink shared channel PUSCH. The measurement result may be called measurement report.

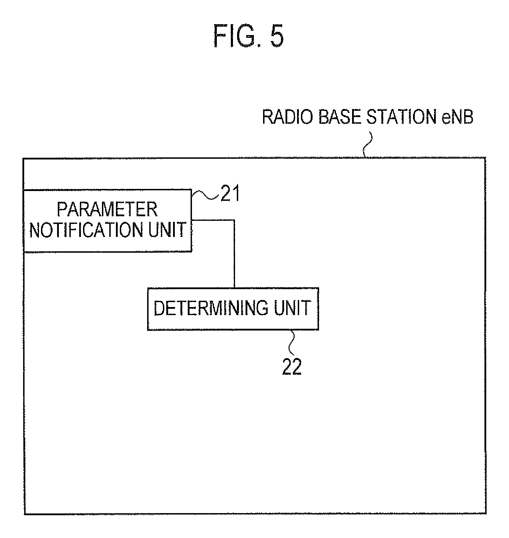

As shown in FIG. 5, the radio base station eNB includes a parameter notification unit 21 and a determining unit 22.

The parameter notification unit 21 is configured to notify the mobile station UE of the aforementioned parameters for determination.

Specifically, the parameter notification unit 21 is configured to notify the mobile station UE of the aforementioned parameters for determination through the physical downlink shared channel PDSCH.

The mobile station UE may be notified of the aforementioned parameters for determination as broadcast information or as a RRC message which is individual control information.

The determining unit 22 is configured to determine whether the mobile station UE is to perform handover based on the measurement result of the radio qualities of the mobile station UE for the serving and neighbor cells which is notified by the mobile station UE.

(Operation of Mobile Communication System According to First Embodiment of the Invention)

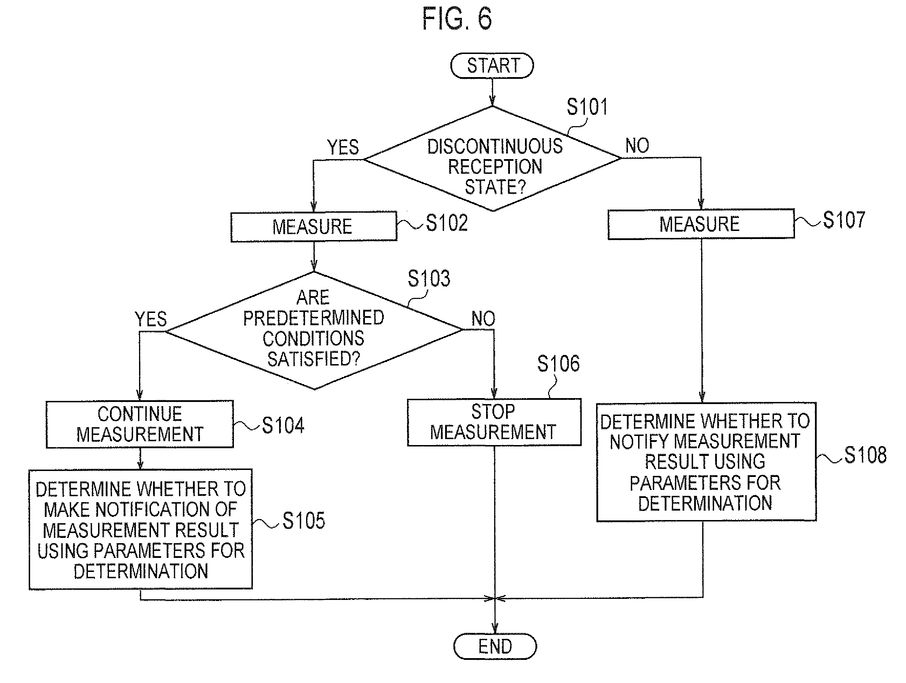

With reference to FIG. 6, a description will be given of an operation of the mobile communication system according to the first embodiment of the present invention and specifically of the aforementioned operation by the mobile station UE according to the first embodiment of the present invention to make notification of the measurement result.

As shown in FIG. 6, in step S101, the mobile station UE determines whether the mobile station UE is in the discontinuous reception state.

If it is determined that the mobile station UE is in the discontinuous reception state, in step S102, the mobile station UE measures the radio qualities for the serving and neighbor cells.

In step S103, the mobile station UE determines whether the predetermined conditions are satisfied based on the parameters for determination (the second parameter) and the measured radio qualities for the serving and neighbor cells.

If it is determined that the predetermined conditions are satisfied, the mobile station UE continues the aforementioned measurement.

In step S105, the mobile station UE determines whether to notify the radio base station eNB of the aforementioned measurement result using the parameters for determination (the first parameter TTT).

For example, the mobile station UE determines to notify the radio base station eNB of the aforementioned measurement result if determining that the following (Formulae 4) to (Formula 6) continue to be satisfied for 0.64 [s].

$$\text{Received power of signal from neighbor cell } Fn + 3 \text{ [dB]} > \text{received power of signal from serving cell} \qquad \text{(Formula 4)}$$

$$Fn = (1\text{-}a)\cdot Fn{-}1 + a\cdot Mn \qquad \text{(Formula 5)}$$

$$a = 1/2 \qquad \text{(Formula 6)}$$

Herein, it is assumed that the parameters for determination (the first and second parameters) take the values described in Table 1.

If it is determined that the mobile station UE is not in the discontinuous reception state, in step S107, the mobile station UE measures the radio qualities for the serving and neighbor cells.

In step S108, the mobile station UE determines whether to notify the radio base station eNB of the aforementioned measurement result based on the parameters for determination (the first and second parameters) and the measured radio qualities for the serving and neighbor cells.

For example, if determining that the following (Formulae 7) to (Formula 9) continue to be satisfied for 0.64 [s], the mobile station UE determines to notify the radio base station eNB of the aforementioned measurement result.

$$\text{Received power of signal from neighbor cell } Fn + 3 \text{ [dB]} > \text{received power of signal from serving cell} \qquad \text{(Formula 7)}$$

$$Fn = (1\text{-}a)\cdot Fn{-}1 + a\cdot Mn \qquad \text{(Formula 8)}$$

$$a = 1/2 \qquad \text{(Formula 9)}$$

Herein, it is assumed that the parameters for determination (the first and second parameters) take the values described in Table 1.

In the first embodiment, there are two types of states: the discontinuous and non-discontinuous reception states. The mobile station and mobile communication method according to the present invention can be also applied to the case where there are three types of states: a long discontinuous reception state, a short discontinuous reception state, and a non-discontinuous reception state.

When there are three types of states: the long-term discontinuous reception state, short-term discontinuous reception state, and non-discontinuous reception state, for example, the present invention is applied only when the mobile station UE in the long discontinuous reception, and the mobile station UE may perform the aforementioned measurement only at the reception periods when being in the short discontinuous reception state in a similar manner to the conventional art.

In the aforementioned first embodiment, the reference signal received powers (RSRP) are used as the radio qualities of the serving and neighbor cells. However, RSRQ, RS-SIR, and CQI can be used instead. Alternatively, the radio quality at each of the serving and neighbor cells may be at least one of the RSRP, RSRQ, RS-SIR, and CQI.

The RSRQ (reference signal received quality power) is a value obtained by dividing the downlink reference signal received power by a downlink RSSI (received signal strength indicator).

Herein, the RSSI refers to a total reception level observed in the mobile station. Specifically, the RSSI is a reception level including all of thermal noise, interference power from a different cell, a power of a desired signal from a serving cell, and the like (see 3GPP TS36.214, V8.3.0 for the definition of the RSRQ).

The RS-SIR refers to a SIR (signal-to-interference ratio) of the downlink reference signal.

The CQI (channel quality indicator) refers to downlink radio quality information (see 3GPP TS36.213, V8.3.0 for the definition of the CQI).

In the aforementioned first embodiment, the mobile station UE determines whether to continue the aforementioned measurement using the TTT, hysteresis, and filter coefficient. However, the mobile station UE may perform the same determination using some of the TTT, hysteresis, and filter coefficient.

The mobile station UE may perform the aforementioned determination using only the TTT and filter coefficient among the TTT, hysteresis, and filter coefficient, for example.

(Operation and Effect of Mobile Communication System According to First Embodiment of the Invention)

In the mobile communication system according to the first embodiment of the present invention, even if the mobile station UE is in the discontinuous reception state, the measurement unit 13 can continue to measure the radio qualities of the mobile station UE for the serving and neighbor cells using the parameters for determination even after the reception period ends when the predetermined conditions are satisfied. Moreover, when the predetermined conditions become unsatisfied, the measurement unit 13 stops the measurement, and the mobile station UE returns to the discontinuous reception state. Accordingly, the mobile station UE reports the measurement result to the network at a proper time and can continue communication without causing disconnection. It is therefore possible to reduce the load on the network and current consumption of the mobile station UE and furthermore improve the user convenience.

(Configuration of Mobile Communication System According to Modification 1 of the Invention)

The configuration of a mobile communication system according to Modification 1 is the same as that of the mobile communication system according to the first embodiment of the present invention except the measurement unit 13 and determining unit 14. Accordingly, description will be given of only the measurement and determining units 13 and 14, and the description of the others will be omitted.

The measurement unit 13 is configured to measure the radio qualities of the mobile station UE for the serving cell and the neighbor cell.

For example, the measurement unit 13 may be configured to measure powers of signals received by the mobile station UE from the serving cell and neighbor cell (for example, the reference signals or the like). The received power of the reference signal may be called RSRP (reference signal received power).

The measurement unit 13 may use the values calculated by (Formulae 2) and (Formula 3) as the measured values of the power Fn of signals received by the mobile station UE from the serving and neighbor cells. The measurement intervals in the physical layer are 200 ms, for example.

The measurement unit 13 may be configured to perform the aforementioned measurement only at the reception periods in the discontinuous reception state when the mobile station UE is in the discontinuous reception state.

The determining unit 14 is configured to determine whether or not to notify the measurement result by the measurement unit 13 or whether or not to transmit the measurement report including the measurement result by the measurement unit 13.

For example, the determining unit 14 may be configured to determine to notify the measurement result when the predetermined conditions continue to be satisfied for a predetermined period of time or longer. Herein, the determining unit 14 may use (Formula 1) above as the predetermined conditions.

Moreover, when the mobile station UE is in the discontinuous reception state, the determining unit 14 is configured to determine whether or not to notify the measurement result by the measurement unit 13, based on the DRX period in the discontinuous reception state and the parameters for determination acquired by the parameter acquisition unit 12.

For example, as shown in FIG. 7, the determining unit 14 may be configured to determine to notify the measurement result based on whether the predetermined conditions continue to be satisfied until the end of the last reception period in the predetermined period of time (the TTT) after the measurement result by the measurement unit 13 at a certain reception period satisfies the predetermined conditions. Herein, the reception period next to the last reception period starts after the predetermined period of time (the TTT) elapses. The above determination is performed based on the DRX period in the discontinuous reception state, the first parameter (the TTT) indicating the aforementioned predetermined period of time, and the second parameter (the hysteresis) which defines the predetermined conditions.

Specifically, in FIG. 7, whether to notify the radio base station eNB of the measurement result is determined based on whether the predetermined conditions continue to be satisfied until the end of a last reception period R4 in the predetermined period TTT after it is determined that the measurement result in a reception period R1 in the discontinuous reception state satisfies the predetermined conditions using the parameters for determination (the second parameter "hysteresis").

In other words, the determining unit 14 may determine to notify the measurement result if the predetermined conditions are satisfied at N consecutive reception periods and otherwise, determine not to notify the measurement result.

Herein, N may be calculated as follows.

$$N = floor(TTT/DRX~period)$$

The floor (x) is a function to round x down to an integer not more than x.

More specifically, if the TTT is 640 ms and the DRX period is 150 ms, N is obtained as the floor(640/150) = 4. The determining unit 14 may therefore determine to notify the measurement result if the predetermined conditions are satisfied at four consecutive reception periods and otherwise, determine not to notify the measurement result.

During the above determination by the determining unit 14, the measurement unit 13 carries out the measurement only at the reception periods in the discontinuous reception control as described above.

The parameters for determination include the first parameter (the TTT) indicating the above-described predetermined period of time, the second parameter which defines the aforementioned conditions (the hysteresis and k (the filter coefficient)), and the like).

Herein, examples of the first and second parameters (the TTT, hysteresis, and k (the filter coefficient)) for determination are shown below.

[Table 2]

| TTT (s) | Hysteresis (dB) | k (filter coefficient) |
|---------|-----------------|------------------------|
| 0.64 | 3 | 8 |

As shown in the above-described example, in the mobile communication system according to the embodiment, even when carrying out the measurement only at the reception periods, the mobile station UE in the discontinuous reception state is configured to determine based on the measurement result whether the predetermined conditions are satisfied and thus determine whether to transmit the measurement report including the measurement result without delay (herein, within the predetermined period of time indicated by the first parameter (the TTT)).

(Operation of Mobile Communication System According to Modification 1 of the Invention)

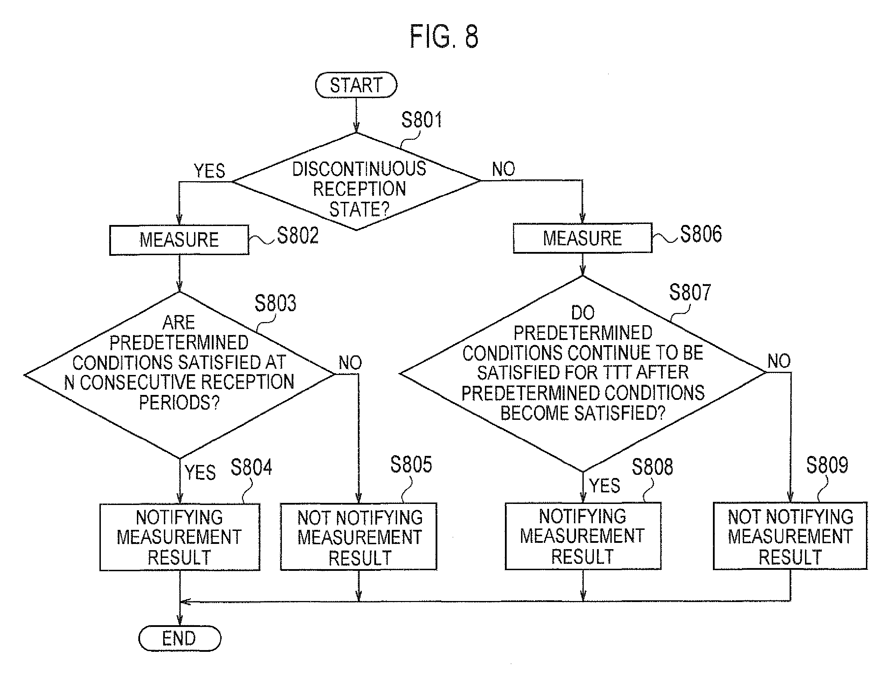

With reference to FIG. 8, a description will be given of the operation of the mobile communication system according to Modification 1 and specifically of the operation of the mobile station UE according to Modification 1 determining whether to make notification of the aforementioned measurement result.

As shown in FIG. 8, in step S801, the mobile station UE determines whether the mobile station UE is in the discontinuous reception state.

If it is determined that the mobile station UE is in the discontinuous reception state (step S801: YES), in step S802, the mobile station UE measures the radio qualities of the serving and neighbor cells.

In step S803, the mobile station UE determines whether the predetermined conditions are satisfied at N consecutive reception periods based on the DRX period, the parameters for determination (the first and second parameters), and the measured radio qualities of the serving and neighbor cells. The value of N is calculated as follows.

$$N = floor(TTT/DRX~period)$$

For example, the mobile station UE determines to notify the radio base station eNB of the aforementioned measurement result when determining that the following (Formulae 4) to (Formula 6) continue to be satisfied at the N consecutive reception periods.

$$\text{Received power of signal from neighbor cell } F_n + 3 \text{ [dB]} > \text{SIGNAL RECEIVED POWER from serving cell} \qquad \text{(Formula 4)}$$

$$F_n = (1\text{-}a) \cdot F_{n-1} + a \cdot M_n \qquad \text{(Formula 5)}$$

$$a = 1/2 \qquad \text{(Formula 6)}$$

Herein, it is assumed that the parameters for determination (the first and second parameters) take the values described in Table 1.

If it is determined that the predetermined conditions are satisfied at the N consecutive reception periods (step S803: YES), in step S804, the mobile station UE decides to notify the radio base station eNB of the measurement result and notifies the radio base station eNB of the measurement result.

On the other hand, if it is not determined that the predetermined conditions are satisfied at the N consecutive reception periods (step S803: NO), in step S805, the mobile station UE decides not to notify the radio base station eNB of the measurement result and does not notify the radio base station eNB of the measurement result.

If it is determined that the mobile station UE is not in the discontinuous reception state (step S801: NO), in step S806, the mobile station UE measures the radio qualities of the serving and neighbor cells.

In step S807, the mobile station UE determines whether to notify the radio base station eNB of the aforementioned measurement result based on the parameters for determination (the first and second parameters) and the measured radio qualities of the serving and neighbor cells.

For example, if the mobile station UE determines that the following (Formulae 7) to (Formula 9) continue to be satisfied for 0.64 [s], the mobile station UE determines to notify the radio base station eNB of the aforementioned measurement result.

$$\text{Received power of signal from neighbor cell } F_n + 3 \text{ [dB]} > \text{received power of signal from serving cell} \qquad \text{(Formula 7)}$$

$$F_n = (1\text{-}a) \cdot F_{n-1} + a \cdot M_n \qquad \text{(Formula 8)}$$

$$a = 1/2 \qquad \text{(Formula 9)}$$

Herein, it is assumed that the parameters for determination (the first and second parameters) take the values described in Table 1.

If it is determined to notify the radio base station eNB of the aforementioned measurement result (step S807: YES), in step S808, the mobile station UE notifies the radio base station eNB of the measurement result.

If it is not determined to notify the radio base station eNB of the aforementioned measurement result (step S807: NO), in step S809, the mobile station UE does not notify the radio base station eNB of the measurement result.

(Operation and Effect of Mobile Communication System According to Second Embodiment of the Invention)

In the mobile communication system according to the second embodiment of the present invention, even if the mobile station UE is in the discontinuous reception state and carries out the measurement only at the reception periods, the mobile station UE can determine whether the predetermined conditions are satisfied based on the measurement result and therefore determine whether to send the measurement report including the measurement result without delay. Accordingly, the mobile station UE can report the measurement result to the network at a proper time and continue communication without causing disconnection. It is therefore possible to reduce the load on the network and current consumption of the mobile station UE and furthermore improve the user convenience.

(Mobile Communication System According to Modification 2 of the Invention)

A mobile communication system according to Modification 2 is the same as the aforementioned mobile communication system according to Modification 1 except the way that the determining unit 14 calculates N, and the description of the others will be omitted.

In the mobile communication system according to Modification 2, the determining unit 14 is configured to calculate N as follows.

$$N = \text{ceiling}(\text{TTT}/\text{DRX period})$$

The ceiling(x) is a function of rounding x up to an integer not less than x.

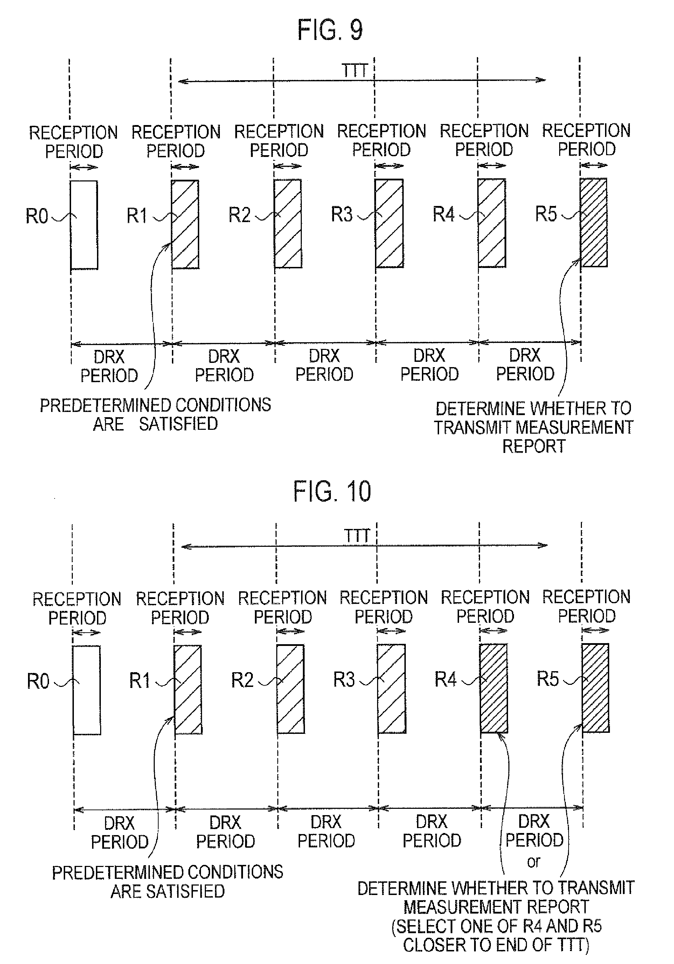

As shown in FIG. 9, the determining unit 14 may determine to make notification of the measurement result based on N = ceiling(TTT/DRX period) when the predetermined conditions are satisfied at N consecutive reception periods (R1 to R5, for example) and determine not to make notification of the measurement result otherwise.

For example, if the TTT is 640 ms and the DRX period is 150 ms, N is calculated as the ceiling(640/150) = 5. The determining unit 14 may determine to make notification of the measurement result if the predetermined conditions are satisfied at five consecutive reception periods and determine not to make the notification otherwise.

(Mobile Communication System According to Modification 3 of the Invention)

A mobile communication system according to Modification 3 is the same as the aforementioned mobile communication system according to Modification 1 except the way of the determining unit 14 to calculate N, and the description of the others will be omitted.

In the mobile communication system according to Modification 3, the determining unit 14 is configured to calculate N as follows.

$$N = \text{round}(\text{TTT}/\text{DRX period})$$

The round(x) is a function of rounding x to an integer.

As shown in FIG. 10, the determining unit 14 may determine to make notification of the measurement result based on N = round(TTT/DRX period) when the predetermined conditions are satisfied at N consecutive reception periods (R1 to R4 (or R5), for example) and determine not to make notification of the measurement result otherwise.

For example, if the TTT is 640 ms and the DRX period is 150 ms, N is calculated as round(640/150) = 4. The determining unit 14 may determine to make notification of the measurement result if the predetermined conditions are satisfied at four consecutive reception periods and determine not to make the notification otherwise.

(Modification 4)

Note that operation of the above described mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE. Also, the storage medium and the processor may be provided in the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1.  A mobile station communicating with a radio base station, the mobile station comprising:

    a parameter acquisition unit configured to acquire a parameter for determination from the radio base station; a measurement unit configured to measure radio qualities of the mobile station in a serving cell and a neighbor cell;
    a determining unit configured to determine whether or not to notify a measurement result performed by the measurement unit, based on the measurement result and the parameter for determination acquired by the parameter acquisition unit; and
    a notification unit configured to notify the radio base station of the measurement result when the determining unit determines to notify the measurement result, wherein
    in the case where the mobile station is in a discontinuous reception state, the measurement unit continues the measurement even after an end of a reception period when a predetermined condition is satisfied, and stops the measurement when the predetermined condition becomes unsatisfied before the determining unit determines to notify the measurement result.

2.  The mobile station according to claim 1, wherein the determining unit determines to notify the measurement result when the predetermined condition continues to be satisfied for a predetermined period of time or longer, and the parameter for determination includes a first parameter indicating the predetermined period of time.

3.  The mobile station according to claim 1, wherein the determining unit determines to notify the measurement result when the predetermined condition continues to be satisfied for a predetermined period of time or longer, and the parameter for determination includes a second parameter which defines the predetermined condition.

4.  A mobile communication method for communication between a radio base station and a mobile station, the method comprising the steps of:

    a step A of notifying a parameter for determination from the radio base station to the mobile station;
    a step B of measuring, at the mobile station, radio qualities of the mobile station in a serving cell and a neighbor cell;
    a step C of determining, at the mobile station, whether or not to notify a measurement result, based on the measurement result and the acquired parameter for determination;
    a step D of notifying the measurement result from the mobile station to the radio base station when it is determined to notify the measurement result; and
    a step E of determining, at the radio base station, whether or not the mobile station is to perform handover based on the measurement result of the radio qualities of the mobile station in the serving and neighbor cells, the measurement result being notified from the mobile station, wherein
    in the step B, in the case of a discontinuous reception state, the mobile station continues the measurement even after an end of a reception period when a predetermined condition is satisfied, and stops the measurement when the predetermined condition becomes unsatisfied before determination of notifying the measurement result.

5.  A mobile station communicating with a radio base station, the mobile station comprising:

    a parameter acquisition unit configured to acquire a parameter for determination from the radio base station; a measurement unit configured to measure radio qualities of the mobile station in a serving cell and a neighbor cell;
    a determining unit configured to determine whether or not to notify a measurement result by the measurement unit, based on the measurement result and the parameter for determination acquired by the parameter acquisition unit; and
    a notification unit configured to notify the radio base station of the measurement result when the determining unit determines to notify the measurement result, wherein

in the case where the mobile station is in a discontinuous reception state, the determining unit determines to notify the measurement result when a predetermined condition is satisfied at consecutive reception periods of a number calculated based on a discontinuous reception period and the parameter for determination.

6. A mobile communication method for communication between a radio base station and a mobile station, the method comprising the steps of:

a step A of notifying a parameter for determination from the radio base station to the mobile station;

a step B of measuring, at the mobile station, radio qualities of the mobile station in a serving cell and a neighbor cell;

a step C of determining, at the mobile station, whether or not to notify a measurement result, based on the measurement result and the acquired parameter for determination;

a step D of notifying the measurement result from the mobile station to the radio base station, when it is determined to notify the measurement result; and

a step E of determining, at the radio base station, whether or not the mobile station is to perform handover based on the measurement result of the radio qualities of the mobile station in the serving and neighbor cells, the measurement result being notified from the mobile station, wherein

in the step C, in the case of a discontinuous reception state, the mobile station determines to notify the measurement result when the predetermined condition is satisfied at consecutive reception periods of a number calculated based on a discontinuous reception period and the parameter for determination.

# FIG. 1

RADIO BASE STATION
eNB

PUSCH

PDCCH
PDSCH

MOBILE STATION
UE

# FIG. 2

MOBILE STATION UE

PARAMETER
ACQUISITION UNIT    ~12

MEASUREMENT UNIT

13

NOTIFICATION UNIT

15

DETERMINING UNIT

14

STATE
MANAGEMENT
UNIT    11

# FIG. 3

TTT

RECEPTION PERIOD — R0

RECEPTION PERIOD — R1

RECEPTION PERIOD — R2

RECEPTION PERIOD — R3

RECEPTION PERIOD — R4

R5

RECEPTION PERIOD — R6

DRX PERIOD | DRX PERIOD | DRX PERIOD | DRX PERIOD | DRX PERIOD

PREDETERMINED CONDITIONS ARE SATISFIED

MEASURE ONLY AT RECEPTION PERIOD

DETERMINE WHETHER TO TRANSMIT MEASUREMENT REPORT

# FIG. 4

TTT

RECEPTION PERIOD — R0

RECEPTION PERIOD — R1

RECEPTION PERIOD

RECEPTION PERIOD

RECEPTION PERIOD

RECEPTION PERIOD — R5

R2    R3    R4

DRX PERIOD | DRX PERIOD | DRX PERIOD | DRX PERIOD | DRX PERIOD

PREDETERMINED CONDITIONS ARE SATISFIED

MEASURE LIKE NON-DISCONTINUOUS RECEPTION STATE

DETERMINE WHETHER TO TRANSMIT MEASUREMENT REPORT

16

## FIG. 5

RADIO BASE STATION eNB

PARAMETER NOTIFICATION UNIT ~21

DETERMINING UNIT
22

FIG. 6

START

DISCONTINUOUS RECEPTION STATE? — S101

YES → MEASURE — S102

NO → MEASURE — S107

ARE PREDETERMINED CONDITIONS SATISFIED? — S103

YES → CONTINUE MEASUREMENT — S104

NO → STOP MEASUREMENT — S106

DETERMINE WHETHER TO MAKE NOTIFICATION OF MEASUREMENT RESULT USING PARAMETERS FOR DETERMINATION — S105

DETERMINE WHETHER TO NOTIFY MEASUREMENT RESULT USING PARAMETERS FOR DETERMINATION — S108

END

# FIG. 7

N CONSECUTIVE RECEPTION PERIODS

TTT

RECEPTION PERIOD | RECEPTION PERIOD | RECEPTION PERIOD | RECEPTION PERIOD | RECEPTION PERIOD | RECEPTION PERIOD

R0    R1    R2    R3    R4    R5

DRX PERIOD | DRX PERIOD | DRX PERIOD | DRX PERIOD | DRX PERIOD

PREDETERMINED CONDITIONS ARE SATISFIED

DETERMINE WHETHER TO TRANSMIT MEASUREMENT REPORT

## FIG. 8

START
↓ S801

DISCONTINUOUS RECEPTION STATE?

YES → MEASURE — S802

ARE PREDETERMINED CONDITIONS SATISFIED AT N CONSECUTIVE RECEPTION PERIODS? — S803

YES S804 → NOTIFYING MEASUREMENT RESULT

NO S805 → NOT NOTIFYING MEASUREMENT RESULT

NO → MEASURE — S806

DO PREDETERMINED CONDITIONS CONTINUE TO BE SATISFIED FOR TTT AFTER PREDETERMINED CONDITIONS BECOME SATISFIED? — S807

YES S808 → NOTIFYING MEASUREMENT RESULT

NO S809 → NOT NOTIFYING MEASUREMENT RESULT

END

# FIG. 9

TTT

| RECEPTION PERIOD | RECEPTION PERIOD | RECEPTION PERIOD | RECEPTION PERIOD | RECEPTION PERIOD | RECEPTION PERIOD |
|---|---|---|---|---|---|

R0    R1    R2    R3    R4    R5

DRX PERIOD    DRX PERIOD    DRX PERIOD    DRX PERIOD    DRX PERIOD

PREDETERMINED CONDITIONS ARE SATISFIED

DETERMINE WHETHER TO TRANSMIT MEASUREMENT REPORT

# FIG. 10

TTT

| RECEPTION PERIOD | RECEPTION PERIOD | RECEPTION PERIOD | RECEPTION PERIOD | RECEPTION PERIOD | RECEPTION PERIOD |
|---|---|---|---|---|---|

R0    R1    R2    R3    R4    R5

DRX PERIOD    DRX PERIOD    DRX PERIOD    DRX PERIOD    DRX PERIOD or

PREDETERMINED CONDITIONS ARE SATISFIED

DETERMINE WHETHER TO TRANSMIT MEASUREMENT REPORT (SELECT ONE OF R4 AND R5 CLOSER TO END OF TTT)

# FIG. 11

| MEASURE SIGNAL RECEIVED POWER OF MOBILE STATION FROM NEIGHBOR CELL | ~S1 |

IF SIGNAL RECEIVED POWER OF MOBILE STATION FROM NEIGHBOR CELL SATISFIES FOLLOWING FORMULA (EVENT A), MOBILE STATION REPORTS EVENT A TO NETWORK. POWER OF SIGNAL RECEIVED POWER OF MOBILE STATION FROM NEIGHBOR CELL + HYSTERESIS > SIGNAL RECEIVED POWER FROM SERVING CELL ~S2

NETWORK DETERMINES TO CAUSE MOBILE STATION TO PERFORM HAND OVER TO CELL WHOSE EVENT A IS REPORTED ~S3

# FIG. 12

# FIG. 13

<table>
<tr><td colspan="2" align="center"><b>INTERNATIONAL SEARCH REPORT</b></td><td>International application No.<br>PCT/JP2009/064234</td></tr>
</table>

| A. CLASSIFICATION OF SUBJECT MATTER |
|---|
| H04W36/30(2009.01)i, H04W24/10(2009.01)i, H04W36/00(2009.01)i, H04W52/02 (2009.01)i |

According to International Patent Classification (IPC) or to both national classification and IPC

| B. FIELDS SEARCHED |
|---|
| Minimum documentation searched (classification system followed by classification symbols)<br>H04W36/30, H04W24/10, H04W36/00, H04W52/02 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2004/066521 A1 (Kyocera Corp.),<br>05 August, 2004 (05.08.04),<br>Full text; all drawings<br>& JP 2004-228705 A    & US 2006/0052104 A1<br>& KR 10-2005-0091091 A  & CN 1739251 A | 1-6 |
| A | Nokia, Measurements in E-UTRAN, [online].<br>3GPP TSG-RAN WG2 #56, 2006.11.10, R2-063068,<br>[retrieved on 2009-09-04]. Retrieved from the<br>Internet:<URL:http://ftp.3gpp.org/tsg_ran/WG2_<br>RL2/TSGR2_56/Documents/R2-063068.zip> | 1-6 |

☐ Further documents are listed in the continuation of Box C.     ☐ See patent family annex.

| | |
|---|---|
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>04 September, 2009 (04.09.09) | Date of mailing of the international search report<br>15 September, 2009 (15.09.09) |
| Name and mailing address of the ISA/<br>Japanese Patent Office | Authorized officer |
| Facsimile No. | Telephone No. |

Form PCT/ISA/210 (second sheet) (April 2007)